# EUROPEAN PATENT APPLICATION

(11) **EP 4 822 391 A1**
(43) Date of publication of application: **14.10.2026**
(21) Application number: 24910918.2
(22) Date of filing: 19.12.2024
(51) Int. Cl.: G01S 7/481, G01S 17/93

(54) **TRANSCEIVING APPARATUS, AND RELATED PRODUCTS**

(30) Priority: 28.12.2023 CN 202311871447
(71) Applicant: Yinwang Intelligent Technologies Co., Ltd., Shenzhen, Guangdong 518110 (CN)
(72) Inventor: WANG, Shuai, Shenzhen, Guangdong 518129 (CN); YU, Anliang, Shenzhen, Guangdong 518129 (CN); QIN, Jiarong, Shenzhen, Guangdong 518129 (CN); CHEN, Mo, Shenzhen, Guangdong 518129 (CN)
(74) Representative: Maiwald GmbH
(86) International application number: PCT/CN2024/140577
(87) International publication number: WO 2025/139989

(57) **Abstract**

A transceiver apparatus, a chip, a radar, a terminal device, and a vehicle terminal are disclosed and are applied to the field of lidar technologies. The transceiver apparatus includes: a first transmit module (Tx1), a first receive module (Rx1), a second receive module (Rx2), and a scanning module. The first transmit module (Tx1) and the first receive module (Rx1) are located on one side of the scanning module, and the second receive module (Rx2) is located on the other side of the scanning module. The first transmit module (Tx1) is configured to transmit a first optical signal. The scanning module is configured to propagate the first optical signal to object space. The scanning module is further configured to propagate a second optical signal from the object space to the first receive module (Rx1), and/or propagate a third optical signal from the object space to the second receive module (Rx2), where the second optical signal and the third optical signal include an echo of the first optical signal. A first field of view corresponding to the first receive module (Rx1) is different from a second field of view corresponding to the second receive module (Rx2). The transceiver apparatus can resolve a problem that it is difficult to achieve both large FoV and high resolution performance.

## Description

This application claims priority to Chinese Patent Application No. 202311871447.1, filed with the China National Intellectual Property Administration on December 28, 2023, and entitled "TRANSCEIVER APPARATUS AND RELATED PRODUCT", which is incorporated herein by reference in its entirety.

### TECHNICAL FIELD

This application relates to the field of lidar technologies, and in particular, to a transceiver apparatus and a related product.

### BACKGROUND

With development of information technologies and computer vision, detection technologies develop rapidly, and various detection apparatuses bring great convenience to people's life and travel. The detection apparatus may be considered as an "eye" for sensing an environment, and includes a vision system sensor like a camera, and a radar system sensor like a millimeter-wave radar, a lidar, and an ultrasonic radar. The lidar (light detection and ranging, lidar, or referred to as a light detection and ranging apparatus) has advantages of a high resolution, good detection performance, and strong concealment, and plays an important role in a process of sensing an environment by a device. In particular, the lidar has been widely applied in the field of intelligent driving, facilitating further development of intelligent driving technologies.

In a line-scanning line-receiving, line-scanning area-receiving, or all-solid-state lidar system architecture based on a single photon avalanche diode (single photon avalanche diode, SPAD) array, due to a limitation of an array scale of the SPAD, when a designed field of view (field of view, FoV) of the lidar system is large, a corresponding angular resolution is low and a ranging capability is poor. When the designed FoV of the lidar system is small, the corresponding angular resolution is high and the ranging capability is good.

In other words, it is difficult for the currently designed lidar system architecture to achieve both large FoV and high resolution performance.

### SUMMARY

Embodiments of this application provide a transceiver apparatus and a related product, to resolve a problem that it is difficult to achieve both large FoV and high resolution performance.

**According to a first aspect**, an embodiment of this application provides a transceiver apparatus, where the transceiver apparatus includes:
a first transmit module, a first receive module, a second receive module, and a scanning module, where
the first transmit module and the first receive module are located on one side of the scanning module, and the second receive module is located on the other side of the scanning module;
the first transmit module is configured to transmit a first optical signal;
the scanning module is configured to propagate the first optical signal to object space;
the scanning module is further configured to propagate a second optical signal from the object space to the first receive module, and/or propagate a third optical signal from the object space to the second receive module, where the second optical signal and the third optical signal include an echo of the first optical signal; and
a first field of view corresponding to the first receive module is different from a second field of view corresponding to the second receive module.

In this embodiment of this application, a transceiver apparatus is provided. The transceiver apparatus includes one transmit module, two receive modules, and one scanning module. The two receive modules are combined for use, to meet both large FoV and high resolution performance.

In this embodiment of this application, the first transmit module and one of the receive modules are located on one side of the scanning module, and the other receive module is located on the other side of the scanning module. Optionally, the first transmit module and the first receive module may be located on one side of the scanning module, and the second receive module may be located on the other side of the scanning module; or the first transmit module and the second receive module may be located on one side of the scanning module, and the first receive module may be located on the other side of the scanning module. This is not limited in this embodiment of this application. In addition, a first field of view corresponding to the first receive module is different from a second field of view corresponding to the second receive module. Therefore, relative locations of the first receive module and the second receive module may be set, so that the first field of view and the second field of view are spliced in different manners, to meet requirements of an application scenario for different fields of view and different resolutions. Therefore, the transceiver apparatus can have both large FoV and high resolution performance. This resolves a problem that it is difficult for a currently designed lidar system architecture to achieve both large FoV and high resolution performance.

**In a possible implementation**, the first optical signal, the second optical signal, and the third optical signal are parallel to each other.

In an implementation of this application, a possible specific implementation of a relationship among the first optical signal, the second optical signal, and the third optical signal is provided. Specifically, the first optical signal, the second optical signal, and the third optical signal are parallel to each other. It may be understood that the scanning module is configured to propagate, to object space, the first optical signal transmitted by the first transmit module, and is further configured to propagate a part of an echo (that is, the second optical signal) of the first optical signal to the first receive module, and propagate a part of an echo (that is, the third optical signal) of the first optical signal to the second receive module. A relative location relationship among the scanning module, the first transmit module, the first receive module, and the second receive module is adjusted, so that the first optical signal, the second optical signal, and the third optical signal can be parallel to each other, to ensure that the first receive module and the second receive module can simultaneously detect a same target.

**In a possible implementation**, the first field of view and the second field of view have different vertical fields of view.

In an implementation of this application, a possible specific implementation of the first field of view and the second field of view is provided. Specifically, the first field of view and the second field of view have different vertical fields of view. According to this embodiment of this application, relative locations of the first receive module and the second receive module may be set, so that the first field of view and the second field of view are spliced in different manners, to increase a vertical resolution of the transceiver apparatus, so that the transceiver apparatus can have performance of both a large FoV and a vertical high resolution.

**In a possible implementation**, the first field of view is included in the second field of view, or the second field of view is included in the first field of view.

In an implementation of this application, a possible specific implementation of the first field of view and the second field of view is provided. Specifically, the first field of view is included in the second field of view, or the second field of view is included in the first field of view. It may be understood that, when the first field of view is included in the second field of view, a region corresponding to the first field of view may be considered as a region of interest (region of interest, ROI). The relative locations of the first receive module and the second receive module are set, so that the first field of view is included in the second field of view, to increase a resolution of the ROI (that is, the region corresponding to the first field of view), so that the transceiver apparatus can have both large FoV and high resolution performance of the ROI. It may be understood that, when the second field of view is included in the first field of view, a region corresponding to the second field of view may be considered as a region of interest (region of interest, ROI). The relative locations of the first receive module and the second receive module are set, so that the second field of view is included in the first field of view, to increase a resolution of the ROI (that is, the region corresponding to the second field of view), so that the transceiver apparatus can have both large FoV and high resolution performance of the ROI.

**In a possible implementation**, the first transmit module is disposed above the first receive module, or the first receive module is disposed above the first transmit module, or the first transmit module and the first receive module are disposed horizontally.

In an implementation of this application, a possible specific implementation of a location relationship between the first transmit module and the first receive module is provided. Specifically, the first transmit module and the first receive module may be disposed in a top-down stacking manner. For example, the first transmit module is disposed above the first receive module, or the first receive module is disposed above the first transmit module. Alternatively, the first transmit module and the first receive module may be disposed in a left-right stacking manner. To be specific, the first transmit module and the first receive module are disposed horizontally. This is not limited in this embodiment of this application.

**In a possible implementation**, the scanning module is a multi-faceted scanning mirror; and
the multi-faceted scanning mirror is a four-faceted polygonal scanning mirror.

In an implementation of this application, a possible specific implementation of the scanning module is provided. Specifically, the scanning module may be a multi-faceted scanning mirror, and the multi-faceted scanning mirror is a four-faceted polygonal scanning mirror. It may be understood that an included angle between two adjacent surfaces of the four-faceted polygonal scanning mirror is 90°.

**In a possible implementation**, the transceiver apparatus further includes at least one of the following:
a first reflector and a second reflector;
the first reflector is configured to propagate the first optical signal transmitted by the first transmit module to the scanning module, and the first reflector is further configured to propagate the second optical signal from the scanning module to the first receive module; and
the second reflector is configured to propagate the third optical signal from the scanning module to the second receive module.

In an implementation of this application, a possible specific implementation of the transceiver apparatus is provided. Specifically, the transceiver apparatus further includes a first reflector and/or a second reflector. The first reflector is configured to propagate the first optical signal transmitted by the first transmit module to the scanning module, and the first reflector is further configured to propagate the second optical signal from the scanning module to the first receive module. The second reflector is configured to propagate the third optical signal from the scanning module to the second receive module. It may be understood that, the first reflector and/or the second reflector may be disposed to change an optical path for receiving and sending, thereby reducing a width of the entire transceiver apparatus, and improving space resource utilization inside the entire apparatus.

**In a possible implementation**, a transmitting time sequence of the first optical signal is the same as a receiving time sequence of the second optical signal and a receiving time sequence of the third optical signal.

In an implementation of this application, a possible specific implementation of a relationship between the transmitting time sequence of the first optical signal and both of the receiving time sequence of the second optical signal and the receiving time sequence of the third optical signal is provided. Specifically, the transmitting time sequence of the first optical signal is the same as the receiving time sequence of the second optical signal and the receiving time sequence of the third optical signal. It may be understood that when the first transmit module transmits the first optical signal, the first receive module and the second receive module respectively receive the second optical signal and the third optical signal simultaneously. Optionally, the first receive module and the second receive module may be in a signal receiving state before the first transmit module transmits an optical signal, or the first receive module and the second receive module may be in a signal receiving state only after a period of time since the first transmit module starts to transmit an optical signal. Optionally, the first receive module and the second receive module may end the signal receiving state only after the first transmit module ends transmitting the optical signal, or the first receive module and the second receive module may end the signal receiving state before the first transmit module ends transmitting the optical signal. This is not limited in this embodiment of this application. According to this embodiment of this application, a transmitting time sequence is the same as a receiving time sequence, so that transmission costs of the transceiver apparatus can be effectively reduced, thereby effectively reducing power consumption of the entire apparatus, and improving detection accuracy of the transceiver apparatus.

**In a possible implementation**, the first receive module includes a first detector and a first receive optical assembly, and the second receive module includes a second detector and a second receive optical assembly.

In an implementation of this application, a possible specific implementation of the first receive module and the second receive module is provided. Specifically, the first receive module includes a first detector and a first receive optical assembly, the second receive module includes a second detector and a second receive optical assembly, the first detector and the second detector may be the same or different, and the first receive optical assembly and the second receive optical assembly may be the same or different. This is not limited in this embodiment of this application.

**In a possible implementation**, the first detector and the second detector are the same, a focal length of the first receive optical assembly is different from a focal length of the second receive optical assembly, and the first field of view and the second field of view overlap in angular space.

In an implementation of this application, a possible specific implementation of the first receive module and the second receive module is provided. Specifically, the first detector in the first receive module is the same as the second detector in the second receive module, the focal length of the first receive optical assembly in the first receive module is different from the focal length of the second receive optical assembly in the second receive module, and the first field of view corresponding to the first receive module and the second field of view corresponding to the second receive module overlap in angular space, to meet requirements of an application scenario for different fields of view and different resolutions, so that the transceiver apparatus can have both large FoV and high resolution performance.

It may be understood that, if the focal length of the first receive optical assembly is greater than the focal length of the second receive optical assembly, an FoV (that is, the first field of view) correspondingly covered by the first receive module is smaller, and a resolution is higher, which is suitable for long-distance ranging; and an FoV (that is, the second field of view) correspondingly covered by the second receive module is larger, and a resolution is lower, which is suitable for short-distance ranging. An overlapping region of the first field of view and the second field of view can meet detection requirements of both a large FoV and a high resolution. Optionally, the first field of view and the second field of view overlap in angular space. The first field of view may be included in the second field of view, the second field of view may be included in the first field of view, or the first field of view and the second field of view may have an intersection but have no inclusion relationship. This is not limited in this embodiment of this application.

It may be understood that, if the focal length of the first receive optical assembly is less than the focal length of the second receive optical assembly, an FoV (that is, the first field of view) correspondingly covered by the first receive module is larger, and a resolution is lower, which is suitable for short-distance ranging; and an FoV (that is, the second field of view) correspondingly covered by the second receive module is smaller, and a resolution is higher, which is suitable for long-distance ranging. An overlapping region of the first field of view and the second field of view can meet detection requirements of both a large FoV and a high resolution. Optionally, the first field of view and the second field of view overlap in angular space. The first field of view may be included in the second field of view, the second field of view may be included in the first field of view, or the first field of view and the second field of view may have an intersection but have no inclusion relationship. This is not limited in this embodiment of this application.

**In a possible implementation**, a focal length of the first receive optical assembly is the same as a focal length of the second receive optical assembly, the first detector is disposed at an offset relative to an optical center of the first receive optical assembly, the second detector is disposed at an offset relative to an optical center of the second receive optical assembly, and the first field of view and the second field of view are continuous and do not overlap in angular space; or
a focal length of the first receive optical assembly is the same as a focal length of the second receive optical assembly, optical axes of the first receive module and the second receive module are not parallel, and the first field of view and the second field of view are continuous and do not overlap in angular space.

In an implementation of this application, a possible specific implementation of the first receive module and the second receive module is provided. Specifically, the focal length of the first receive optical assembly in the first receive module is the same as the focal length of the second receive optical assembly in the second receive module, the first detector in the first receive module is disposed at an offset relative to the optical center of the first receive optical assembly, and the second detector in the second receive module is disposed at an offset relative to the optical center of the second receive optical assembly. In addition, the first field of view and the second field of view are continuous and do not overlap in angular space, to meet requirements of an application scenario for different fields of view and different resolutions, so that the transceiver apparatus can have both large FoV and high resolution performance; or
the focal length of the first receive optical assembly in the first receive module is the same as the focal length of the second receive optical assembly in the second receive module, and optical axes of the first receive module and the second receive module are respectively tilted in different directions, so that the optical axes of the two are not parallel. In addition, the first field of view and the second field of view are continuous and do not overlap in angular space, to meet requirements of an application scenario for different fields of view and different resolutions, so that the transceiver apparatus can have both large FoV and high resolution performance.

It may be understood that, the focal length of the first receive optical assembly is the same as the focal length of the second receive optical assembly, and both the FoV (that is, the first field of view) correspondingly covered by the first receive module and the FoV (that is, the second field of view) correspondingly covered by the second receive module are relatively small, and resolutions are relatively high. However, the detector is eccentrically disposed relative to the receive optical assembly, or two receive modules are tilted in different directions, so that the first field of view and the second field of view can be continuous and do not overlap in angular space. To be specific, the first field of view and the second field of view are seamlessly spliced in angular space to form a relatively large FoV, so that the transceiver apparatus can have both large FoV and high resolution performance.

**In a possible implementation**, the first receive module is the same as the second receive module, the first detector has a first offset relative to the second detector, the first offset is N+0.5 pixels, the first field of view and the second field of view overlap in angular space, and N is a quantity of channels in a non-overlapping interval.

In an implementation of this application, a possible specific implementation of the first receive module and the second receive module is provided. Specifically, the first receive module and the second receive module are the same, and may be understood as two receive modules developed based on a same SPAD model. When the two receive modules are assembled, the first detector in the first receive module is disposed at an offset of N+0.5 pixels relative to the second detector in the second receive module, so that the first field of view corresponding to the first receive module and the second field of view corresponding to the second receive module overlap in angular space, to meet requirements of an application scenario for different fields of view and different resolutions, so that the transceiver apparatus can have both large FoV and high resolution performance.

It may be understood that, the first receive module and the second receive module are the same, and both the FoV (that is, the first field of view) correspondingly covered by the first receive module and the FoV (that is, the second field of view) correspondingly covered by the second receive module are relatively large, and resolutions are relatively low. However, the first detector is disposed at an offset of N+0.5 pixels relative to the second detector, so that the first field of view and the second field of view overlap in angular space, and a resolution of an overlapping region is increased by at least one time. Therefore, the transceiver apparatus can have both large FoV and high resolution performance.

**In a possible implementation**, the first field of view and the second field of view overlap in angular space, the first receive module includes a first detector and a first receive optical assembly, and the second receive module includes a second image sensor chip and a second receive optical assembly; or the first receive module includes a first image sensor chip and a first receive optical assembly, and the second receive module includes a second detector and a second receive optical assembly.

In an implementation of this application, a possible specific implementation of the first receive module and the second receive module is provided. Specifically, the first field of view corresponding to the first receive module and the second field of view corresponding to the second receive module overlap in angular space, the first receive module includes the first detector and the first receive optical assembly, and the second receive module includes the second image sensor chip and the second receive optical assembly, to meet requirements of an application scenario for different fields of view and different resolutions, so that the transceiver apparatus can have both large FoV and high resolution performance; or
the first field of view corresponding to the first receive module and the second field of view corresponding to the second receive module overlap in angular space, the first receive module includes the first image sensor chip and the first receive optical assembly, and the second receive module includes the second detector and the second receive optical assembly, to meet requirements of an application scenario for different fields of view and different resolutions, so that the transceiver apparatus can have both large FoV and high resolution performance.

It may be understood that the fields of view corresponding to the two receive modules overlap in angular space, one receive module thereof is a receive module based on direct time of flight (direct time of flight, DToF), and the other receive module is a receive module based on image perception. Overlapping FoVs (that is, the first field of view and the second field of view) correspondingly covered by the two receive modules are relatively large, the receive module based on DToF corresponds to a relatively low resolution, and the receive module based on image perception can increase a resolution corresponding to the overlapping field of view, that is, increase a resolution corresponding to the receive module based on DToF, so that the transceiver apparatus can have both large FoV and high resolution performance.

**In a possible implementation**, the transceiver apparatus is applied to a vehicle;
when a vehicle speed of the vehicle is greater than a first value, the first receive module enables receiving of an optical signal, and the second receive module disables receiving of an optical signal, where the first field of view is less than the second field of view; and
when the vehicle speed of the vehicle is less than a second value, the first receive module disables receiving of an optical signal, and the second receive module enables receiving of an optical signal, where the second value is less than or equal to the first value.

In an implementation of this application, a possible specific implementation of working modes of the first receive module and the second receive module is provided. Specifically, when the transceiver apparatus is applied to a vehicle, in an application scenario in which the vehicle travels at a high speed or at a low speed, working modes of the first receive module and the second receive module are different, and working mode switching can be performed according to different requirements of the application scenario. A possible working mode is a high-speed traveling mode of the vehicle. The first receive module that correspondingly covers a relatively small FoV (that is, the first field of view) enables receiving of an optical signal, has a relatively high resolution, and is suitable for long-distance ranging, and the second receive module that correspondingly covers a relatively large FoV (that is, the second field of view) disables receiving of an optical signal. In a low-speed traveling mode of the vehicle, the second receive module that correspondingly covers a relatively large FoV (that is, the second field of view) enables receiving of an optical signal, has a relatively low resolution, and is suitable for short-distance ranging, and the first receive module that correspondingly covers a relatively small FoV (that is, the first field of view) disables receiving of an optical signal. It may be understood that, in an application scenario in which the vehicle travels at a high speed or at a low speed, the first value and the second value may be used as boundaries between the high speed and the low speed. It is determined that the vehicle travels at the high speed when the vehicle speed is greater than the first value, and it is determined that the vehicle travels at the low speed when the vehicle speed is less than the second value. In addition, the second value is less than or equal to the first value. This is not limited in this embodiment of this application. According to embodiments of this application, requirements of an application scenario for different fields of view and different resolutions can be met, and system computing power overheads can be effectively reduced.

**According to a second aspect**, an embodiment of this application provides a chip, where the chip includes the transceiver apparatus according to the first aspect or any possible implementation of the first aspect.

**According to a third aspect**, an embodiment of this application provides a radar or a radar system, where the radar or the radar system includes the transceiver apparatus according to the first aspect or any possible implementation of the first aspect, or includes the chip according to the second aspect.

In a possible implementation, the radar includes but is not limited to a lidar and the like.

In a possible implementation, there may be a smart sensor integrated with a plurality of sensors. When the smart sensor includes but is not limited to a laser detection function, the smart sensor may also be referred to as a radar or a radar system.

**According to a fourth aspect**, an embodiment of this application provides a terminal device, where the terminal device includes the transceiver apparatus according to the first aspect or any possible implementation of the first aspect, or includes the chip according to the second aspect, or includes the radar or the radar system according to the third aspect.

**According to a fifth aspect**, an embodiment of this application provides a vehicle terminal, where the vehicle terminal includes the transceiver apparatus according to the first aspect or any possible implementation of the first aspect, or includes the chip according to the second aspect, or includes the radar or the radar system according to the third aspect, or includes the terminal device according to the fourth aspect.

In embodiments of this application, relative locations of a first receive module and a second receive module are set, so that a first field of view and a second field of view are spliced in different manners, to meet requirements of an application scenario for different fields of view and different resolutions. Therefore, the transceiver apparatus can have both large FoV and high resolution performance. This resolves a problem that it is difficult for a currently designed lidar system architecture to achieve both large FoV and high resolution performance.

### BRIEF DESCRIPTION OF DRAWINGS

To describe the technical solutions in embodiments of this application more clearly, the following briefly describes the accompanying drawings used in embodiments of this application. It is clear that, the accompanying drawings described below show merely some embodiments of this application, and a person of ordinary skill in the art may still derive other drawings from these accompanying drawings without creative efforts.
FIG. 1A is a diagram of an application scenario of a radar according to an embodiment of this application;
FIG. 1B is a diagram of an application scenario of a radar according to an embodiment of this application;
FIG. 2A is a diagram of an architecture of a radar according to an embodiment of this application;
FIG. 2B is a diagram of an architecture of a radar according to an embodiment of this application;
FIG. 3 is a diagram of a structure of a transceiver apparatus according to an embodiment of this application;
FIG. 4 is a diagram of a structure of a transceiver apparatus according to an embodiment of this application;
FIG. 5 is a diagram of a structure of a transceiver apparatus according to an embodiment of this application;
FIG. 6 is a diagram of a structure of a transceiver apparatus according to an embodiment of this application;
FIG. 7 is a diagram of a three-dimensional structure of a transceiver apparatus according to an embodiment of this application;
FIG. 8 is a diagram of a three-dimensional structure of a transceiver apparatus according to an embodiment of this application;
FIG. 9 is a diagram of a three-dimensional structure of a transceiver apparatus according to an embodiment of this application;
FIG. 10 is a diagram of a signal receiving and transmitting time sequence according to an embodiment of this application;
FIG. 11 is a diagram of field of view splicing according to an embodiment of this application;
FIG. 12 is a diagram of field of view splicing according to an embodiment of this application;
FIG. 13 is a diagram of field of view splicing according to an embodiment of this application;
FIG. 14 is a diagram of a structure of a receive module according to an embodiment of this application;
FIG. 15 is a diagram of a structure of a receive module according to an embodiment of this application;
FIG. 16 is a diagram of field of view splicing according to an embodiment of this application;
FIG. 17 is a diagram of field of view splicing according to an embodiment of this application; and
FIG. 18 is a diagram of a working mode of a receive module according to an embodiment of this application.

### DESCRIPTION OF EMBODIMENTS

To make objectives, technical solutions, and advantages of this application clearer, the following describes embodiments of this application with reference to accompanying drawings in embodiments of this application.

The terms "first", "second", and the like in the specification, claims, and accompanying drawings of this application are used to distinguish between different objects, but are not used to describe a specific sequence. In addition, terms such as "include" and "have" and any other variants thereof are intended to cover a non-exclusive inclusion. For example, processes, methods, systems, products, or devices that include a series of steps or units are not limited to listed steps or units, but instead, optionally further include steps or units that are not listed, or optionally further include other steps or units inherent to these processes, methods, products, or devices.

"Embodiments" mentioned herein mean that specific features, structures, or characteristics described in combination with the embodiments may be included in at least one embodiment of this application. The phrase shown in various locations in the specification may not necessarily refer to a same embodiment, and is not an independent or optional embodiment exclusive from another embodiment. It may be explicitly and implicitly understood by a person skilled in the art that, in embodiments of this application, unless otherwise specified or a logical conflict occurs, terms and/or descriptions in embodiments are consistent and may be mutually referenced, and technical features in different embodiments may be combined based on an internal logical relationship thereof to form a new embodiment.

It should be understood that, in this application, "at least one (item)" means one or more, "a plurality of" means two or more, "at least two (items)" means two, three, or more, and "and/or" is used to describe an association relationship between associated objects, and indicates that there may be three relationships. For example, "A and/or B" may indicate that only A exists, only B exists, and both A and B exist, where A and B may be singular or plural. The character "/" generally indicates an "or" relationship between the associated objects. "At least one of the following items (pieces)" or a similar expression thereof means any combination of these items, including any combination of singular items (pieces) or plural items (pieces). For example, at least one of a, b, or c may indicate a, b, c, a and b, a and c, b and c, or a, b, and c, where a, b, and c may be singular or plural.

As described in the background, it is difficult for the currently designed lidar system architecture to achieve both large FoV and high resolution performance. This application provides a transceiver apparatus and a related product, and relates to the field of lidar technologies, to resolve a problem that it is difficult to achieve both large FoV and high resolution performance.

To describe the solutions of this application more clearly, the following first describes some possible application scenarios of the lidar.

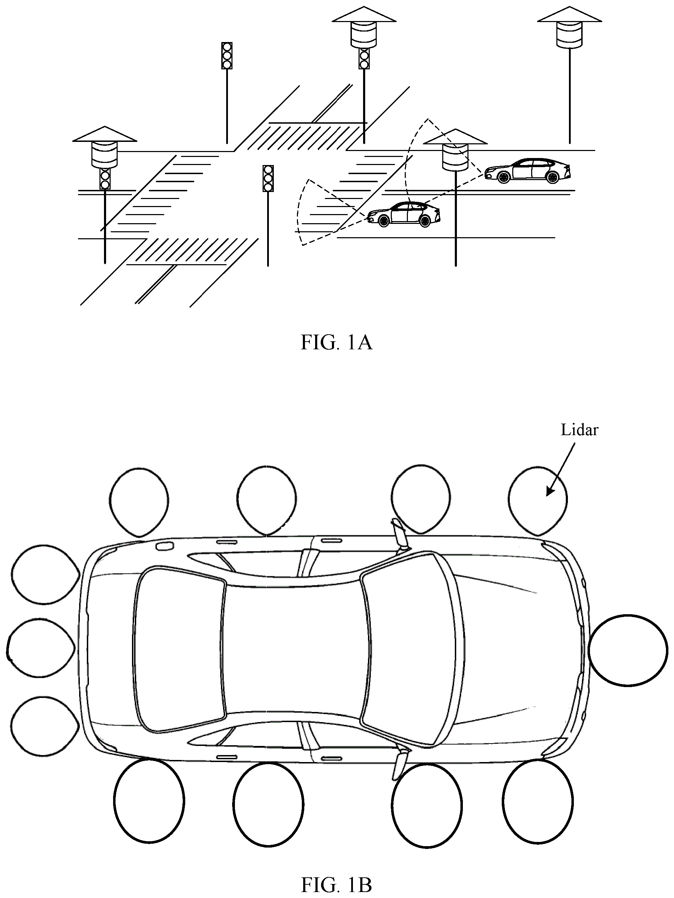

FIG. 1A and FIG. 1B are diagrams of application scenarios of a radar according to an embodiment of this application.

As shown in FIG. 1A and FIG. 1B, in the example application scenarios, an example in which a lidar is installed on a vehicle is used.

The vehicle may be, for example, an unmanned vehicle, an intelligent vehicle, an electric vehicle, or a digital vehicle. The lidar may be deployed at various locations of the vehicle (see FIG. 1B). For example, the lidar may be deployed in any one or more directions of four directions: front, rear, left, and right of the vehicle, to capture information about an ambient environment of the vehicle. In FIG. 1A, an example in which the lidar is deployed in the front of the vehicle is used. The lidar may sense a sector region shown by a dashed-line box shown in FIG. 1A. The sector region may be referred to as a detection region of the lidar (or referred to as a field of view of the lidar).

In a possible implementation, the lidar may obtain, in real time or periodically, latitude and longitude, a speed, and an orientation of an ego vehicle, or association information of a target in a specific range (for example, another vehicle around) (for example, a distance from the target, a moving speed of the target, a posture of the target, or a grayscale map of the target). The lidar or the vehicle may determine a location, path planning, and/or the like of the vehicle based on the association information. For example, the location of the vehicle may be determined by using the longitude and latitude, or a traveling direction and a destination of the vehicle in a future period of time are determined by using the speed and the orientation, or a quantity and density of obstacles around the vehicle are determined by using distances from surrounding objects. Further, optionally, assisted driving, autonomous driving, or the like of the vehicle may be implemented in combination with a function of an advanced driver-assistance system (advanced driver-assistance system, ADAS). It should be understood that a principle of detecting association information of a target by the lidar is as follows: The lidar transmits detection light in a specific direction. If a target exists in a detection region of the lidar, the target may reflect the received detection light back to the lidar (the reflected detection light may be referred to as an echo signal), and then the lidar determines association information of the target based on the echo signal.

It should be noted that the foregoing application scenario is merely an example. The lidar (the lidar includes an optical waveguide assembly provided in this application) provided in this application may be further applied to a plurality of other possible scenarios, and is not limited to the scenario shown in the foregoing example. For example, the lidar may also be installed on an unmanned aerial vehicle as an airborne radar. For another example, the lidar may also be installed in a roadside unit (roadside unit, RSU), and used as a roadside traffic lidar, to implement intelligent vehicle-road cooperative communication. For another example, the lidar may be installed on an automated guided vehicle (automated guided vehicle, AGV). The AGV is a transport vehicle that is equipped with an automatic navigation apparatus like an electromagnetic or optical navigation apparatus, that can travel along a specified navigation path and that has safety protection and various load transfer functions. Details are not enumerated herein. It should be noted that the application scenarios described in this application are intended to describe the technical solutions in this application more clearly, and do not constitute a limitation on the technical solutions provided in this application. A person of ordinary skill in the art may learn that, with emergence of new application scenarios, the technical solutions provided in this application are also applicable to a similar technical problem.

Based on the foregoing content, the application scenario may be applied to fields such as unmanned driving, autonomous driving, assisted driving, intelligent driving, networked vehicles, security monitoring, remote interaction, surveying and mapping, or artificial intelligence.

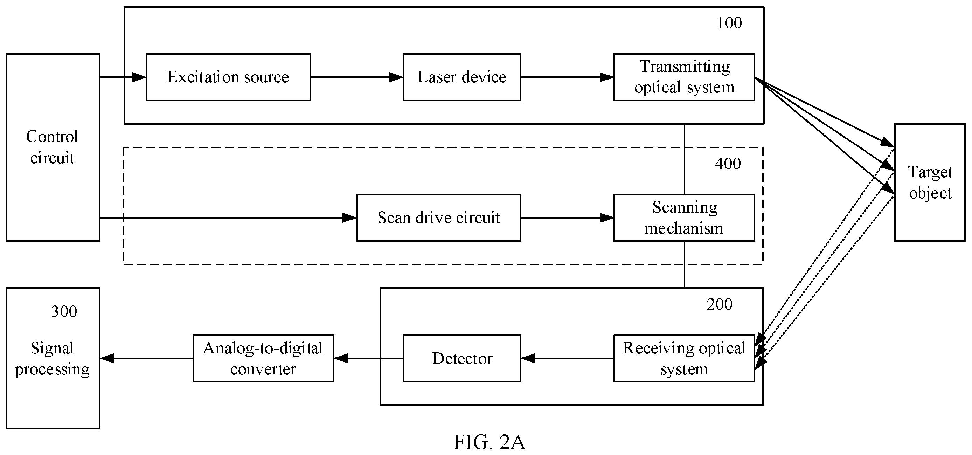

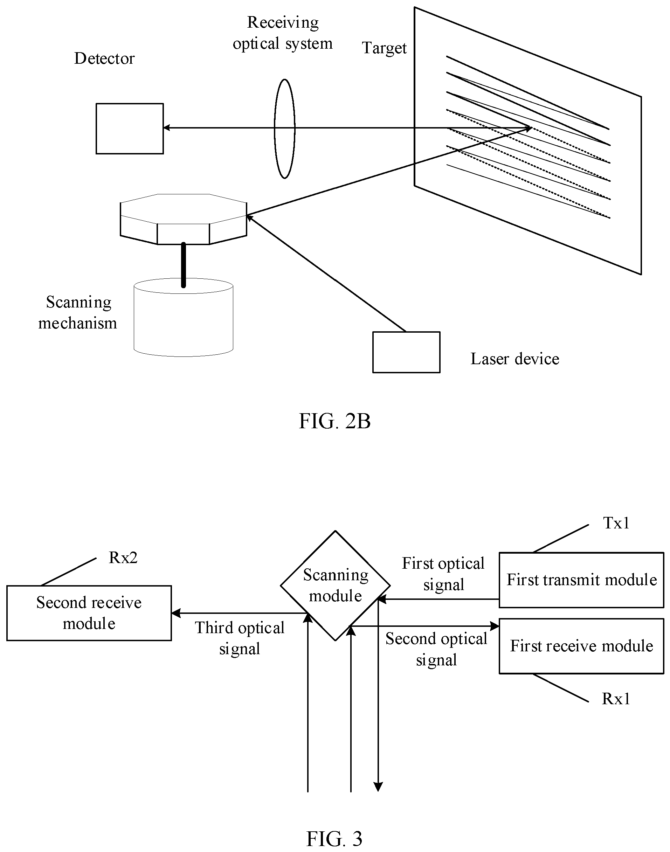

The following describes some related concepts of the lidar with reference to FIG. 2A and FIG. 2B.

The lidar, also referred to as an optical radar, is short for a light detection and ranging (light detection and ranging) system, and may also be referred to as a laser radar or a LADAR (laser detection and ranging).

The lidar uses light as a detection medium, and implements detection of a target, for example, ranging, speed measurement, or azimuth angle measurement, through transmission and reception of laser. The lidar may implement ranging of the target based on a time of flight of the laser, where the time of flight is a time difference between transmission and reception of the laser. Alternatively, the lidar may implement ranging of the target based on a phase difference between a transmitted laser signal and a received echo signal of the laser signal. A greatest advantage of the lidar is that a Doppler imaging technology can be used to create a clear three-dimensional (3D) image of the target. The lidar collects information such as three-dimensional coordinates, reflectivity, and texture of a large quantity of dense points on a surface of the target through transmission and reception of the laser, obtains a three-dimensional model of the measured target based on the collected information, establishes a three-dimensional point cloud map, and draws an environment map, so as to achieve an objective of environment perception. Compared with conventional passive imaging technologies such as visible light and infrared ray, the lidar imaging technology overturns a conventional two-dimensional projection imaging mode, and can collect depth information on a surface of a target to obtain relatively complete spatial information of the target. After data processing, a three-dimensional surface of the target is reconstructed to obtain a three-dimensional graph that can better reflect a geometric shape of the target. In addition, rich feature information such as a reflection characteristic and a motion speed of the surface of the target, providing sufficient information support for data processing such as target detection, identification, and tracking, and reducing algorithm difficulty.

FIG. 2A is a diagram of an architecture of a radar according to an embodiment of this application.

As shown in FIG. 2A, a lidar mainly includes a laser transmitting part (or system) 100, a laser receiving part (or system) 200, and a signal processing part (or system) 300.

The laser transmitting part 100 includes an excitation source (or referred to as a laser driver), a laser device, and a transmitting optical system. The excitation source drives the laser device to transmit a laser beam (or a laser pulse), and the laser beam (or the laser pulse) is transmitted outward through the transmitting optical system. The laser receiving part 200 includes a receiving optical system and a detector. After a laser beam transmitted from the lidar meets a target object, the laser beam acts with the target object to form a reflected/scattered echo beam. After being collected by the receiving optical system, the echo beam is received by the detector, an optical signal is converted into an electrical signal, and the electrical signal is processed by an analog front end and then transferred to the signal processing part 300. The signal processing part 300 processes the received signal to obtain information such as a distance from, a speed, and an azimuth angle of the target object. In addition, information such as a surface form and a physical attribute of the target may be obtained to establish an object model. The detector is usually an optoelectronic detector, and converts a received optical signal into an electrical signal. The electrical signal is usually an analog signal. The signal processing part 300 is usually configured to process a digital signal, for example, is a digital signal processor (digital signal processor, DSP). Therefore, the analog electrical signal is converted into a digital signal by using an analog-to-digital converter (ADC) and provided to the signal processing part 300. In addition, the electrical signal may be amplified, and an amplified electrical signal is converted into a digital signal by using the analog-to-digital converter and then provided to the signal processing part 300. The signal processing part 300 includes a signal processing circuit, configured to process a digital signal to obtain information such as a distance from, a speed, and an azimuth angle of a target object, and further establish an object model. The lidar further includes a control circuit, for example, a control part configured to control the excitation source and a control part configured to control a scan drive circuit. The two control parts may be integrated together, or may be disposed independently. In addition, the signal processing circuit and the control circuit may alternatively be integrated together, or may be disposed independently.

In addition, in an implementation, the laser transmitting part 100 may further include a laser modulator and a light beam controller. A laser beam transmitted by the laser device passes through the light beam controller. The light beam controller controls a direction and a quantity of lines of the transmitted laser beam under control of the laser modulator, and the laser beam transmitted from the light beam controller is transmitted outward through the transmitting optical system.

In addition, the lidar may further include a scanning part (or system) 400. The laser beam transmitted by the laser device is scanned on a plane under an action of the scanning part 400, so as to generate real-time plane graph information. The scanning part 400 mainly includes a scanning mechanism and a scanning drive circuit. The scanning drive circuit is configured to drive the scanning mechanism to operate, and a laser beam changes from a "line" to a "plane" under an action of the scanning mechanism.

A mechanical rotation scanning manner is used as an example. For details, refer to FIG. 2B. FIG. 2B is a diagram of an architecture of a radar according to an embodiment of this application.

As shown in FIG. 2B, the scanning drive circuit drives the scanning mechanism to rotate at a stable rotational speed. After a laser beam is incident to an optical element of the transmitting optical system, the scanning mechanism drives the optical element to rotate, to implement dense scanning of the laser beam on a target plane, so as to generate plane graph information. The scanning mechanism herein is, for example, a motor, and the scanning drive circuit is a motor driver. The motor rotates to drive the optical element in the transmitting optical system to rotate, so that after the laser beam incident to the optical element is reflected by the optical element, an effect change from "line scanning" to "area scanning" of the laser is quickly and accurately implemented.

In a current line-scanning line-receiving, line-scanning area-receiving, or all-solid-state lidar system architecture based on an SPAD array, due to a limitation of an array scale of the SPAD, when a designed field of view (field of view, FoV) of the lidar system is large, a corresponding angular resolution is low and a ranging capability is poor. When the designed FoV of the lidar system is small, the corresponding angular resolution is high and the ranging capability is good. In other words, it is difficult for the currently designed lidar system architecture to achieve both large FoV and high resolution performance.

In view of this, this application provides a transceiver apparatus and a related product, and relates to the field of lidar technologies. Relative locations of a first receive module and a second receive module are set, so that a first field of view and a second field of view are spliced in different manners, to meet requirements of an application scenario for different fields of view and different resolutions. Therefore, the transceiver apparatus can have both large FoV and high resolution performance. This resolves a problem that it is difficult for a currently designed lidar system architecture to achieve both large FoV and high resolution performance.

The following describes the transceiver apparatus and the related product provided in this application with reference to the accompanying drawings.

FIG. 3 is a diagram of a structure of a transceiver apparatus according to an embodiment of this application.

As shown in FIG. 3, the transceiver apparatus includes:
**a first transmit module Tx1, a first receive module Rx1, a second receive module Rx2, and a scanning module.**

The first transmit module Tx1 and the first receive module Rx1 are located on one side of the scanning module, and the second receive module Rx2 is located on the other side of the scanning module.

The first transmit module Tx1 is configured to transmit a first optical signal.

The scanning module is configured to propagate the first optical signal to object space.

The scanning module is further configured to propagate a second optical signal from the object space to the first receive module Rx1, and/or propagate a third optical signal from the object space to the second receive module Rx2, where the second optical signal and the third optical signal include an echo of the first optical signal.

A first field of view corresponding to the first receive module Rx1 is different from a second field of view corresponding to the second receive module Rx2.

It can be learned from FIG. 3 that, in this embodiment of this application, the first transmit module Tx1 and one of the receive modules are located on one side of the scanning module, and the other receive module is located on the other side of the scanning module. Specifically, that which receive module (the first receive module Rx1 or the second receive module Rx2) and the first transmit module Tx1 are located on a same side is not limited in this embodiment of this application.

Optionally, the first transmit module Tx1 and the first receive module Rx1 may be located on one side of the scanning module, and the second receive module Rx2 may be located on the other side of the scanning module. Optionally, the first transmit module Tx1 and the second receive module Rx2 may be located on one side of the scanning module, and the first receive module Rx1 may be located on the other side of the scanning module. This is not limited in this embodiment of this application.

For example, that the first transmit module Tx1 and the first receive module Rx1 are located on one side of the scanning module is used as an example. There are a plurality of possible location relationships between the first transmit module Tx1 and the first receive module Rx1. Details are as follows:

### Location relationship 1:

The first transmit module Tx1 and the first receive module Rx1 are disposed in a top-down stacking manner. For example, the first transmit module Tx1 is disposed above the first receive module Rx1, or the first receive module Rx1 is disposed above the first transmit module Tx1.

It may be understood that, because heat dissipation of the transmit module is relatively difficult, if a heat dissipation path is on a bottom cover of the entire apparatus, the first transmit module Tx1 is disposed at a lower part of the entire apparatus; or if the heat dissipation path is on an upper cover of the entire apparatus, the first transmit module Tx1 is disposed at an upper part of the entire apparatus.

### Location relationship 2:

The first transmit module Tx1 and the first receive module Rx1 are disposed in a left-right stacking manner, that is, the first transmit module Tx1 and the first receive module Rx1 are disposed horizontally.

It should be understood that the location relationship 1 and the location relationship 2 that exist between the first transmit module Tx1 and the first receive module Rx1 are merely used as two possible examples for description, and should not constitute a limitation on this embodiment of this application. Other location relationships obtained based on proper variations of the location relationship 1 and the location relationship 2 should all fall within the protection scope of embodiments of this application.

Optionally, the scanning module in this embodiment of this application is a multi-faceted scanning mirror, and the multi-faceted scanning mirror is a four-faceted polygonal scanning mirror.

It may be understood that an included angle between two adjacent surfaces of the four-faceted polygonal scanning mirror is 90°.

It is difficult for the currently designed lidar system architecture to achieve both large FoV and high resolution performance.

However, in this embodiment of this application, a designed first field of view corresponding to the first receive module is different from a designed second field of view corresponding to the second receive module. Therefore, relative locations of the first receive module and the second receive module may be set, so that the first field of view and the second field of view are spliced in different manners, to meet requirements of an application scenario for different fields of view and different resolutions. Therefore, the transceiver apparatus can have both large FoV and high resolution performance. This resolves a problem that it is difficult for a currently designed lidar system architecture to achieve both large FoV and high resolution performance.

**In a possible embodiment**, the transceiver apparatus shown in FIG. 3 may further include at least one of the following:
a first reflector and a second reflector.

The first reflector is configured to propagate the first optical signal transmitted by the first transmit module Tx1 to the scanning module, and the first reflector is further configured to propagate the second optical signal from the scanning module to the first receive module Rx1.

The second reflector is configured to propagate the third optical signal from the scanning module to the second receive module Rx2.

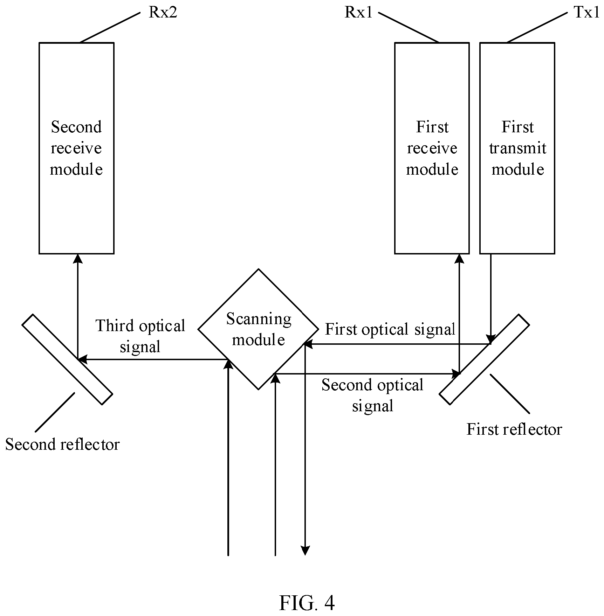

For details, refer to FIG. 4 to FIG. 6. FIG. 4 to FIG. 6 are diagrams of structures of several transceiver apparatuses according to an embodiment of this application.

As shown in FIG. 4, the transceiver apparatus includes a first transmit module Tx1, a first receive module Rx1, a second receive module Rx2, a scanning module, a first reflector, and a second reflector.

It may be understood that, the transceiver apparatus shown in FIG. 4 may be considered as that the first reflector and the second reflector are additionally added to the transceiver apparatus shown in FIG. 3. Therefore, for details of components in the transceiver apparatus shown in FIG. 4, refer to the description of the transceiver apparatus shown in FIG. 3. Details are not described herein again.

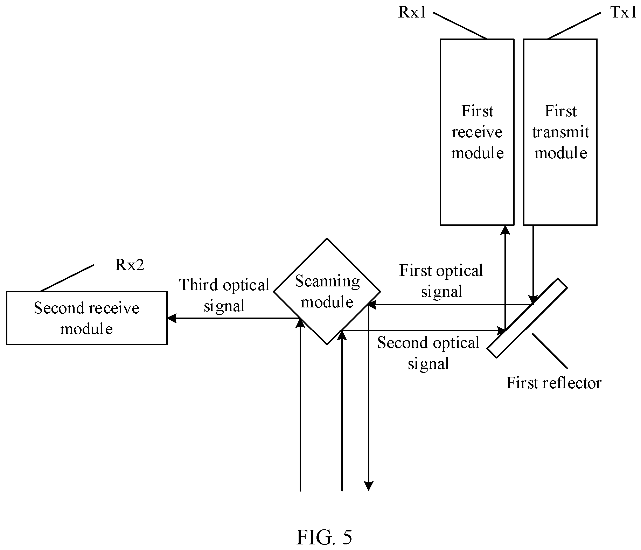

As shown in FIG. 5, the transceiver apparatus includes a first transmit module Tx1, a first receive module Rx1, a second receive module Rx2, a scanning module, and a first reflector.

It may be understood that, the transceiver apparatus shown in FIG. 5 may be considered as that the first reflector is additionally added to the transceiver apparatus shown in FIG. 3. Therefore, for details of components in the transceiver apparatus shown in FIG. 5, refer to the description of the transceiver apparatus shown in FIG. 3. Details are not described herein again.

Optionally, a second reflector may be additionally added to the transceiver apparatus shown in FIG. 3. An obtained new transceiver apparatus also falls within the protection scope of this application. A structure and a function of the new transceiver apparatus are similar to those of the transceiver apparatus shown in FIG. 5. Details are not described herein again.

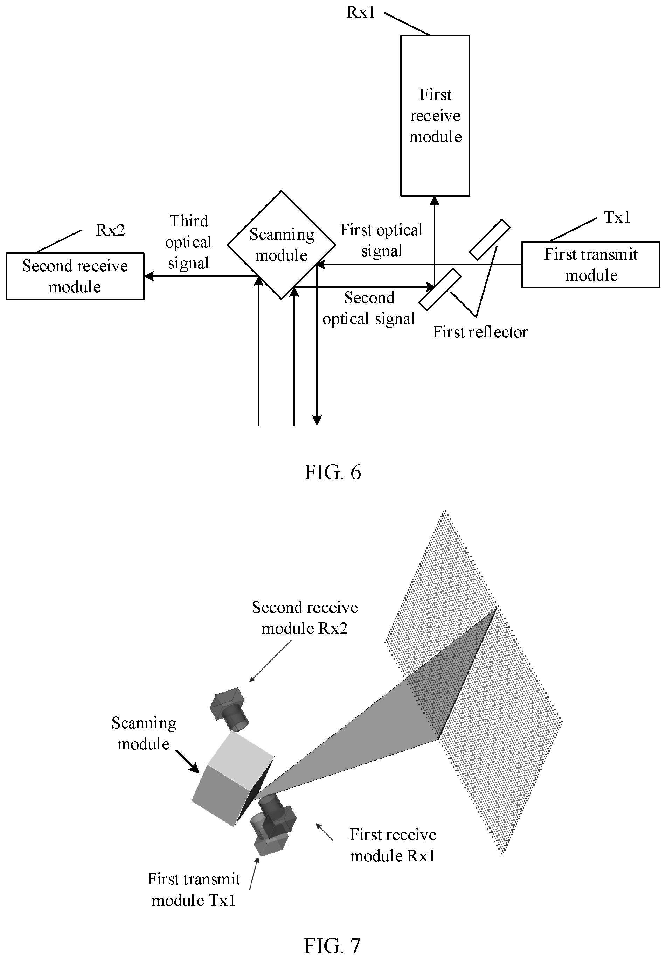

As shown in FIG. 6, the transceiver apparatus includes a first transmit module Tx1, a first receive module Rx1, a second receive module Rx2, a scanning module, and a first reflector.

It can be learned from FIG. 5 and FIG. 6 that a difference between the transceiver apparatus shown in FIG. 6 and the transceiver apparatus shown in FIG. 5 lies in that:

The first reflector in the transceiver apparatus shown in FIG. 5 is an integrally formed complete reflector. The first reflector in the transceiver apparatus shown in FIG. 6 is obtained by assembling two small reflectors. A gap is reserved during assembly of the two small reflectors. A first optical signal transmitted by the first transmit module Tx1 is propagated to the scanning module through the gap.

According to a design of the first reflector, the first transmit module Tx1 in the transceiver apparatus shown in FIG. 6 may be disposed separately from the first receive module Rx1, and does not need to be disposed in a top-down stacking manner or in a left-right stacking manner with the first receive module Rx1. In addition, the first transmit module Tx1 and the second receive module Rx2 form a design of a coaxial architecture.

It should be understood that the transceiver apparatuses in FIG. 3 to FIG. 6 are merely used as several possible examples to describe structural functions of the transceiver apparatus provided in this application, and should not constitute a limitation on this application. Other transceiver apparatuses obtained based on proper variations, supplements, or combinations of the transceiver apparatuses in FIG. 3 to FIG. 6 all fall within the protection scope of this application.

According to this embodiment of this application, the first reflector and/or the second reflector may be disposed to change an optical path for receiving and sending, thereby reducing a width of the entire transceiver apparatus, and improving space resource utilization inside the entire apparatus.

Based on the transceiver apparatuses shown in FIG. 3 to FIG. 6, this application further correspondingly provides diagrams of three-dimensional structures of several transceiver apparatuses.

FIG. 7 to FIG. 9 are diagrams of three-dimensional structures of several transceiver apparatuses according to an embodiment of this application.

As shown in FIG. 7, the transceiver apparatus includes a first transmit module Tx1, a first receive module Rx1, a second receive module Rx2, and a scanning module.

It may be understood that FIG. 7 may be considered as a diagram of a three-dimensional structure of the transceiver apparatus shown in FIG. 3. Therefore, for details of components in the transceiver apparatus shown in FIG. 7, refer to the description of the transceiver apparatus shown in FIG. 3. Details are not described herein again.

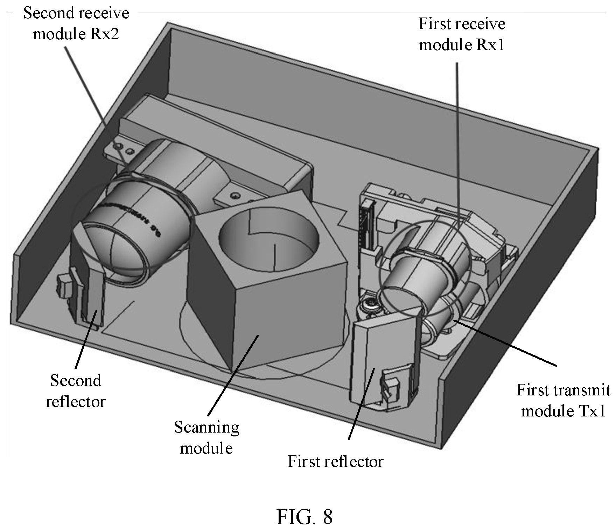

As shown in FIG. 8, the transceiver apparatus includes a first transmit module Tx1, a first receive module Rx1, a second receive module Rx2, a scanning module, a first reflector, and a second reflector.

The scanning module is placed in a center of the transceiver apparatus (LiDAR), and the first receive module Rx1 and the first transmit module Tx1 on a right side of the transceiver apparatus have a location relationship of top-down stacking. Specifically, the first transmit module Tx1 is located below, and the first receive module Rx1 is located above. It may be understood that, because heat dissipation of the first transmit module Tx1 is relatively difficult, if a heat dissipation path is on a bottom cover of the entire apparatus, the first transmit module Tx1 is disposed at a lower part of the entire apparatus. Optionally, if the heat dissipation path is on an upper cover of the entire apparatus, the first transmit module Tx1 is disposed at an upper part of the entire apparatus. The second receive module Rx2 is placed on a left side of the scanning module, and is on a same plane as a module on a right side of the scanning module. The scanning module may be a four-faceted scanning mirror. An included angle between four surfaces of the four-faceted scanning mirror is 90°. Optical path propagation between the scanning module and each module on the left and right sides is implemented by using designs of the first reflector and the second reflector.

Optionally, to ensure that modules on the left and right sides of the scanning module can simultaneously see a same target, optical paths of an optical signal transmitted by the first transmit module Tx1 through the scanning module, an optical signal propagated to the first receive module Rx1 through the scanning module, and an optical signal propagated to the first receive module Rx1 through the scanning module need to be parallel.

Specifically, the optical signal transmitted by the first transmit module Tx1 is illuminated to the scanning module by using the first reflector, and then is transmitted outward. An optical signal reflected by a target is returned along an original path, and is separately illuminated to the first receive module Rx1 and the second receive module Rx2. The reflected optical signal is first illuminated to the first reflector on the right side of the scanning module, and then reflected to the first receive module Rx1 by using the first reflector. The reflected optical signal is first illuminated to the second reflector on the left side of the scanning module, and then reflected to the second receive module Rx2 by using the second reflector.

It may be understood that FIG. 8 may be considered as a diagram of a three-dimensional structure of the transceiver apparatus shown in FIG. 4. Therefore, for details of components in the transceiver apparatus shown in FIG. 8, refer to the description of the transceiver apparatus shown in FIG. 4. Details are not described herein again.

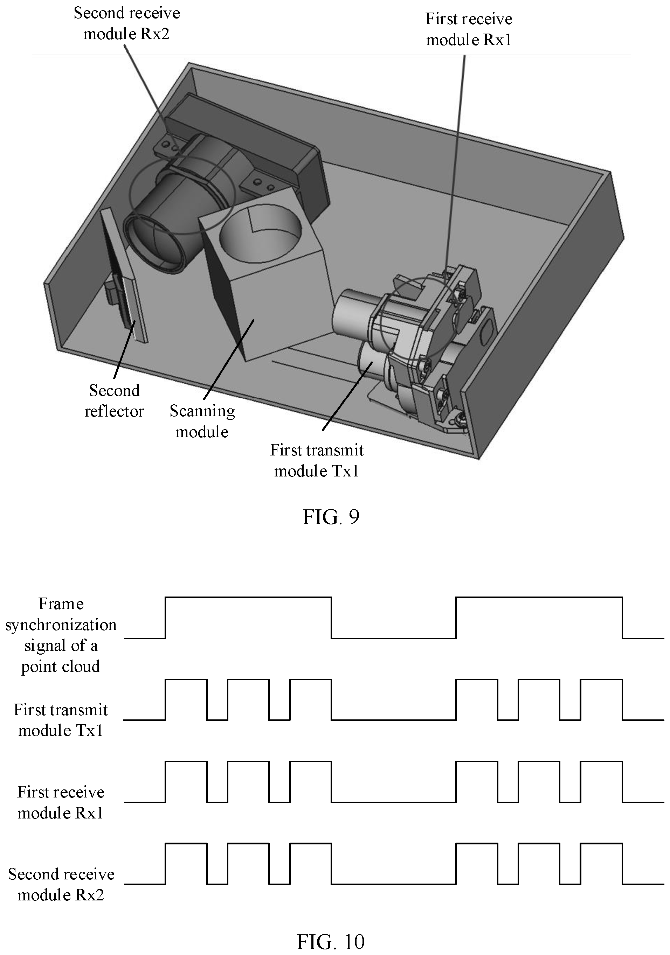

As shown in FIG. 9, the transceiver apparatus includes a first transmit module Tx1, a first receive module Rx1, a second receive module Rx2, a scanning module, and a second reflector.

It may be understood that FIG. 9 may be considered as a diagram of a three-dimensional structure of a new transceiver apparatus obtained by additionally adding the second reflector to the transceiver apparatus shown in FIG. 3. A structure and a function of the new transceiver apparatus are similar to those of the transceiver apparatus (the first reflector is additionally added to the transceiver apparatus shown in FIG. 3) shown in FIG. 5. Therefore, for details of components in the transceiver apparatus shown in FIG. 9, refer to the descriptions of the transceiver apparatuses shown in FIG. 3 and FIG. 5. Details are not described herein again.

It should be understood that the transceiver apparatuses in FIG. 7 to FIG. 9 are merely used as several possible examples to describe a three-dimensional structure of the transceiver apparatus provided in this application, and should not constitute a limitation on this application. Other transceiver apparatuses obtained based on proper variations, supplements, or combinations of the transceiver apparatuses in FIG. 7 to FIG. 9 all fall within the protection scope of this application.

It can be learned from the transceiver apparatuses shown in FIG. 7 to FIG. 9 that the transceiver apparatus shown in FIG. 7 does not have the first reflector and/or the second reflector, and has a relatively large overall width, but has a relatively small quantity of components and a relatively short receive/transmit optical path. In the transceiver apparatus shown in FIG. 8, the first reflector and the second reflector are additionally added, so that an overall width can be reduced. However, there are a relatively large quantity of components, and a receive/transmit optical path is also increased. Compared with the transceiver apparatus shown in FIG. 8, the transceiver apparatus shown in FIG. 9 omits the first reflector, increasing an overall width, but also reducing components. Correspondingly, a receive/transmit optical path can also be compressed, thereby effectively improving receive and transmit efficiency of the entire apparatus and reducing spurious emission of the entire apparatus.

**In a possible embodiment**, the first optical signal, the second optical signal, and the third optical signal in the transceiver apparatus shown in any one of FIG. 3 to FIG. 9 are parallel to each other.

It may be understood that the scanning module is configured to propagate, to object space, the first optical signal transmitted by the first transmit module Tx1, and is further configured to propagate a part of an echo (that is, the second optical signal) of the first optical signal to the first receive module Rx1, and propagate a part of an echo (that is, the third optical signal) of the first optical signal to the second receive module Rx2. A relative location relationship among the scanning module, the first transmit module Tx1, the first receive module Rx1, and the second receive module Rx2 is adjusted, so that the first optical signal, the second optical signal, and the third optical signal can be parallel to each other, to ensure that the first receive module Rx1 and the second receive module Rx1 can simultaneously detect a same target.

**In a possible embodiment**, a transmitting time sequence of the first optical signal in the transceiver apparatus shown in any one of FIG. 3 to FIG. 9 is the same as a receiving time sequence of the second optical signal and a receiving time sequence of the third optical signal.

For details, refer to FIG. 10. FIG. 10 is a diagram of a signal receiving and transmitting time sequence according to an embodiment of this application.

As shown in FIG. 10, a time sequence of transmitting a signal by the first transmit module Tx1, a time sequence of receiving a signal by the first receive module Rx1, a time sequence of receiving a signal by the second receive module Rx2, and a time sequence of a frame synchronization signal of a point cloud are provided.

It may be understood that when the first transmit module Tx1 transmits the first optical signal, the first receive module Rx1 and the second receive module Rx2 respectively receive the second optical signal and the third optical signal simultaneously.

Optionally, the first receive module Rx1 and the second receive module Rx2 may be in a signal receiving state before the first transmit module Tx1 transmits an optical signal, or the first receive module Rx1 and the second receive module Rx2 may be in a signal receiving state only after a period of time since the first transmit module Tx1 starts to transmit an optical signal. This is not limited in this embodiment of this application.

Optionally, the first receive module Rx1 and the second receive module Rx2 may end the signal receiving state only after the first transmit module Tx1 ends transmitting the optical signal, or the first receive module Rx1 and the second receive module Rx2 may end the signal receiving state before the first transmit module Tx1 ends transmitting the optical signal. This is not limited in this embodiment of this application.

According to this embodiment of this application, a transmitting time sequence is the same as a receiving time sequence, so that transmission costs of the transceiver apparatus can be effectively reduced, thereby effectively reducing power consumption of the entire apparatus, and ensuring ranging accuracy of receiving a point cloud, thereby improving detection accuracy of the transceiver apparatus.

**In a possible embodiment**, in the transceiver apparatus shown in any one of FIG. 3 to FIG. 9, a vertical field of view of the first field of view corresponding to the first receive module Rx1 is different from a vertical field of view of the second field of view corresponding to the second receive module Rx2.

According to this embodiment of this application, relative locations of the first receive module Rx1 and the second receive module Rx2 may be set, so that the first field of view and the second field of view are spliced in different manners, to increase a vertical resolution of the transceiver apparatus, so that the transceiver apparatus can have performance of both a large FoV and a vertical high resolution.

**Optionally**, a region of interest (region of interest, ROI) may further exist in a region corresponding to the first field of view and a region corresponding to the second field of view. Details are as follows:

The first field of view is included in the second field of view, or the second field of view is included in the first field of view.

It may be understood that, when the first field of view is included in the second field of view, the region corresponding to the first field of view may be considered as an ROI. The relative locations of the first receive module Rx1 and the second receive module Rx2 are set, so that the first field of view is included in the second field of view, to increase a resolution of the ROI (that is, the region corresponding to the first field of view), so that the transceiver apparatus can have both large FoV and high resolution performance of the ROI.

Alternatively, it may be understood that, when the second field of view is included in the first field of view, the region corresponding to the second field of view may be considered as an ROI. The relative locations of the first receive module Rx1 and the second receive module Rx2 are set, so that the second field of view is included in the first field of view, to increase a resolution of the ROI (that is, the region corresponding to the second field of view), so that the transceiver apparatus can have both large FoV and high resolution performance of the ROI.

**In a possible embodiment**, in the transceiver apparatus shown in any one of FIG. 3 to FIG. 9, the first field of view corresponding to the first receive module Rx1 is different from the second field of view corresponding to the second receive module Rx2. Specifically, the following several cases may exist:

### Case 1:

The first receive module Rx1 includes a first detector and a first receive optical assembly, and the second receive module Rx2 includes a second detector and a second receive optical assembly.

In addition, the first detector and the second detector are the same, a focal length of the first receive optical assembly is different from a focal length of the second receive optical assembly, and the first field of view and the second field of view overlap in angular space.

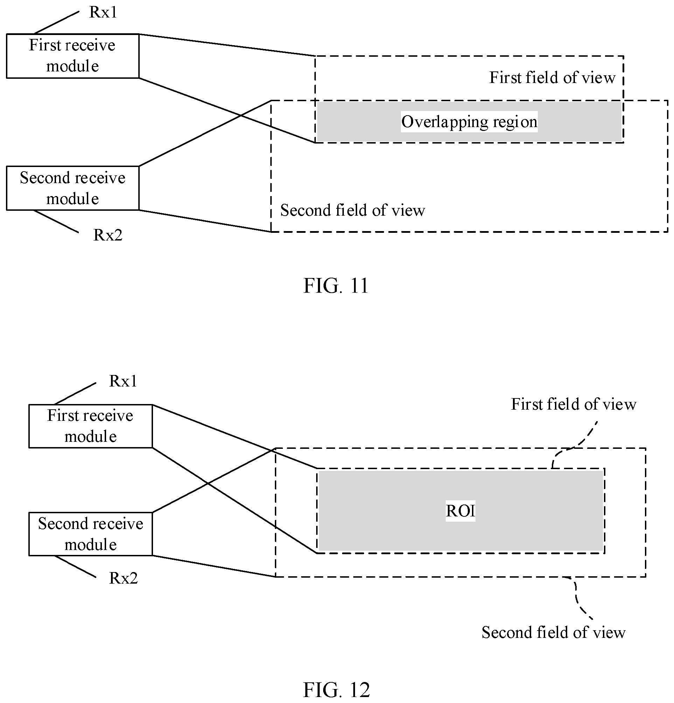

For details, refer to FIG. 11. FIG. 11 is a diagram of field of view splicing according to an embodiment of this application.

As shown in FIG. 11, if the focal length of the first receive optical assembly in the first receive module Rx1 is greater than the focal length of the second receive optical assembly in the second receive module Rx2, an FoV (that is, the first field of view) correspondingly covered by the first receive module Rx1 is smaller, and a resolution is higher, which is suitable for long-distance ranging; and an FoV (that is, the second field of view) correspondingly covered by the second receive module Rx2 is larger, and a resolution is lower, which is suitable for short-distance ranging. An overlapping region of the first field of view and the second field of view can meet detection requirements of both a large FoV and a high resolution.

Optionally, the first field of view and the second field of view overlap in angular space. The first field of view may be included in the second field of view (in this case, the region corresponding to the first field of view may be considered as an ROI), the second field of view may be included in the first field of view (in this case, the region corresponding to the second field of view may be considered as an ROI), or the first field of view and the second field of view may have an intersection but have no inclusion relationship. This is not limited in this embodiment of this application.

Optionally, there is an ROI in the overlapping region corresponding to the first field of view and the second field of view. For details, refer to FIG. 12. FIG. 12 is a diagram of field of view splicing according to an embodiment of this application.

As shown in FIG. 12, if the focal length of the first receive optical assembly in the first receive module Rx1 is greater than the focal length of the second receive optical assembly in the second receive module Rx2, an FoV (that is, the first field of view) correspondingly covered by the first receive module Rx1 is smaller, and a resolution is higher, which is suitable for long-distance ranging; and an FoV (that is, the second field of view) correspondingly covered by the second receive module Rx2 is larger, and a resolution is lower, which is suitable for short-distance ranging. In addition, the first field of view is included in the second field of view (in this case, the region corresponding to the first field of view may be considered as an ROI), so that a resolution of the ROI (that is, the region corresponding to the first field of view) can be increased, and the transceiver apparatus can have both large FoV and high resolution performance of the ROI.

Optionally, if the focal length of the first receive optical assembly in the first receive module Rx1 is less than the focal length of the second receive optical assembly in the second receive module Rx2, an FoV (that is, the first field of view) correspondingly covered by the first receive module Rx1 is larger, and a resolution is lower, which is suitable for short-distance ranging; and an FoV (that is, the second field of view) correspondingly covered by the second receive module Rx2 is smaller, and a resolution is higher, which is suitable for long-distance ranging. An overlapping region of the first field of view and the second field of view can meet detection requirements of both a large FoV and a high resolution.

Optionally, the first field of view and the second field of view overlap in angular space. The first field of view may be included in the second field of view (in this case, the region corresponding to the first field of view may be considered as an ROI), the second field of view may be included in the first field of view (in this case, the region corresponding to the second field of view may be considered as an ROI), or the first field of view and the second field of view may have an intersection but have no inclusion relationship. This is not limited in this embodiment of this application.

Optionally, the first receive module Rx1 and the second receive module Rx2 in this embodiment of this application may share a same back-end system on chip (system on chip, SoC) chip, or may be respectively connected to two different back-end SoC chips. This is not limited in this embodiment of this application.

### Case 2:

The first receive module Rx1 includes a first detector and a first receive optical assembly, and the second receive module Rx2 includes a second detector and a second receive optical assembly.

In addition, a focal length of the first receive optical assembly is the same as a focal length of the second receive optical assembly, the first detector is disposed at an offset relative to an optical center of the first receive optical assembly, the second detector is disposed at an offset relative to an optical center of the second receive optical assembly, and the first field of view and the second field of view are continuous and do not overlap in angular space; or
a focal length of the first receive optical assembly is the same as a focal length of the second receive optical assembly, optical axes of the first receive module and the second receive module are not parallel, and the first field of view and the second field of view are continuous and do not overlap in angular space.

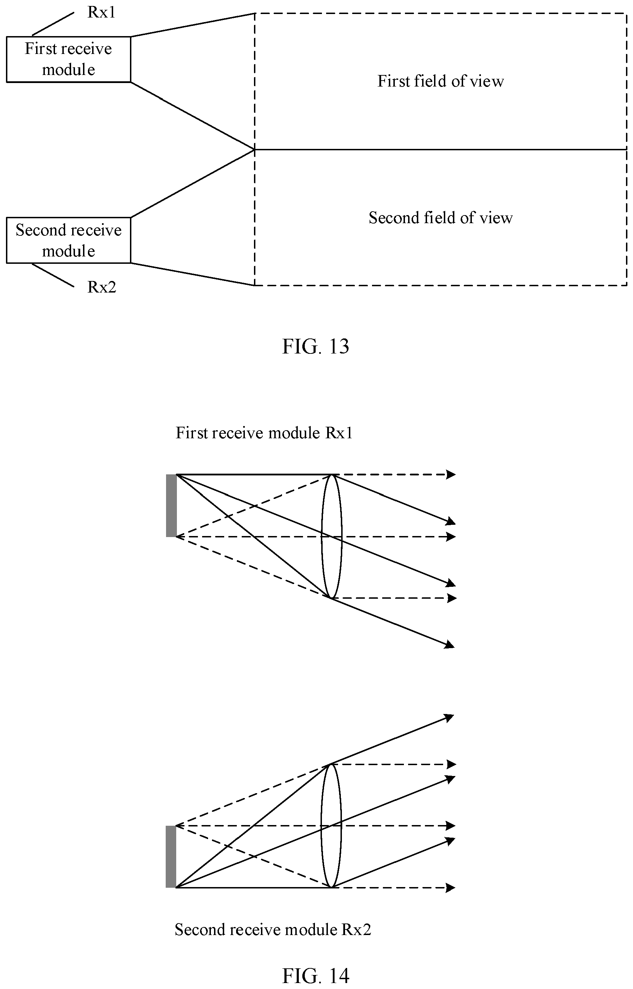

For details, refer to FIG. 13. FIG. 13 is a diagram of field of view splicing according to an embodiment of this application.

As shown in FIG. 13, the focal length of the first receive optical assembly in the first receive module Rx1 is the same as the focal length of the second receive optical assembly in the second receive module Rx2, and both the FoV (that is, the first field of view) correspondingly covered by the first receive module and the FoV (that is, the second field of view) correspondingly covered by the second receive module are relatively small, and resolutions are relatively high. However, the detector is eccentrically disposed relative to the receive optical assembly, or two receive modules are tilted in different directions, so that the first field of view and the second field of view can be continuous and do not overlap in angular space. To be specific, the first field of view and the second field of view are seamlessly spliced in angular space to form a relatively large FoV, so that the transceiver apparatus can have both large FoV and high resolution performance.

Optionally, for a manner in which the detector is eccentrically disposed relative to the receive optical assembly, specifically refer to FIG. 14. FIG. 14 is a diagram of a structure of a receive module according to an embodiment of this application.

As shown in FIG. 14, the focal length of the first receive optical assembly in the first receive module Rx1 is the same as the focal length of the second receive optical assembly in the second receive module Rx2, and the first detector in the first receive module Rx1 is disposed at an offset relative to an optical center of the first receive optical assembly, and may be specifically disposed at an upward offset relative to the optical center, so that the first field of view faces downward. The second detector in the second receive module Rx2 is disposed at an offset relative to an optical center of the second receive optical assembly, and may be specifically disposed at a downward offset relative to the optical center, so that the second field of view faces upward, and the first field of view and the second field of view are continuous and do not overlap in angular space, to meet requirements of an application scenario for different fields of view and different resolutions, so that the transceiver apparatus can have both large FoV and high resolution performance.

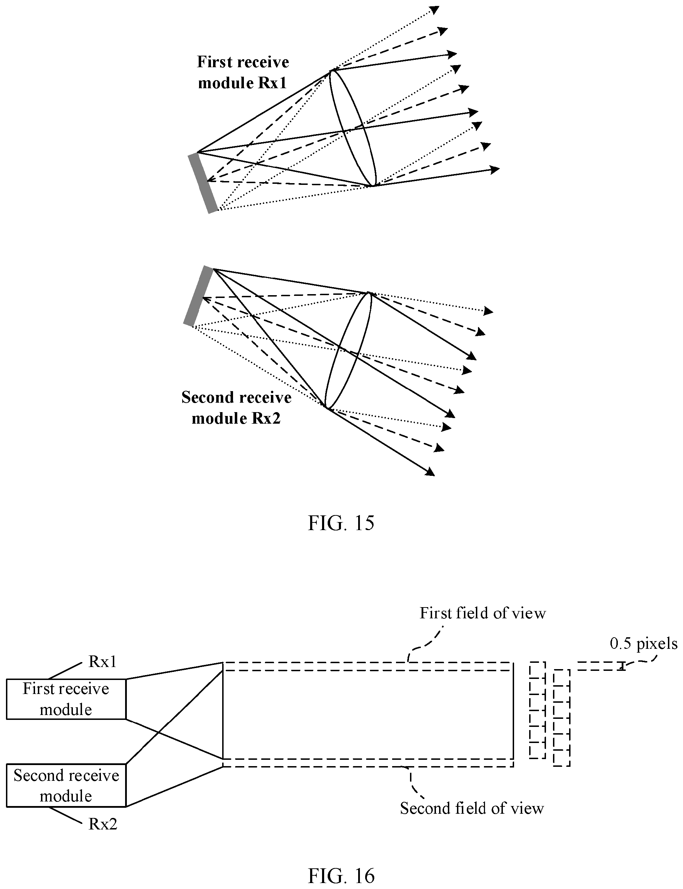

Optionally, for a manner in which the two receive modules are tilted in different directions, specifically refer to FIG. 15. FIG. 15 is a diagram of a structure of a receive module according to an embodiment of this application.

As shown in FIG. 15, the focal length of the first receive optical assembly in the first receive module Rx1 is the same as the focal length of the second receive optical assembly in the second receive module Rx2, and optical axes of the first receive module Rx1 and the second receive module Rx2 are respectively tilted in different directions. Specifically, the optical axis of the first receive module Rx1 may be tilted upward. To be specific, the first detector and the first receive optical assembly are rotated counterclockwise as a whole, so that the first field of view faces downward. The optical axis of the second receive module Rx2 is tilted downward. To be specific, the second detector and the second receive optical assembly are rotated clockwise as a whole, so that the second field of view faces upward, and the optical axes of the two are not parallel. In addition, the first field of view and the second field of view are continuous and do not overlap in angular space, to meet requirements of an application scenario for different fields of view and different resolutions, so that the transceiver apparatus can have both large FoV and high resolution performance.

### Case 3:

The first receive module Rx1 includes a first detector and a first receive optical assembly, and the second receive module Rx2 includes a second detector and a second receive optical assembly.

In addition, the first receive module Rx1 is the same as the second receive module Rx2, the first detector has a first offset relative to the second detector, the first offset is N+0.5 pixels, the first field of view and the second field of view overlap in angular space, and N is a quantity of channels in a non-overlapping interval.

For details, refer to FIG. 16. FIG. 16 is a diagram of field of view splicing according to an embodiment of this application.

As shown in FIG. 16, the first receive module Rx1 and the second receive module Rx2 are the same, and both the FoV (that is, the first field of view) correspondingly covered by the first receive module Rx1 and the FoV (that is, the second field of view) correspondingly covered by the second receive module are relatively large, and resolutions are relatively low. However, the first detector is disposed at an offset of 0.5 pixels relative to the second detector, so that the first field of view and the second field of view overlap in angular space, and a resolution of an overlapping region is increased by at least one time. Therefore, the transceiver apparatus can have both large FoV and high resolution performance.

Optionally, FIG. 16 shows that the first detector is disposed at an offset of 0.5 pixels relative to the second detector, which should not constitute a limitation on this embodiment of this application. Actually, the first detector may be disposed at an offset of N+0.5 pixels relative to the second detector, where N is a quantity of channels in a non-overlapping region. This is not limited in this embodiment of this application.

It may be understood that the first receive module Rx1 and the second receive module Rx2 are the same, and may be understood as two receive modules developed based on a same SPAD model. When the two receive modules are assembled, the first detector in the first receive module Rx1 is disposed at an offset of N+0.5 pixels relative to the second detector in the second receive module Rx2, so that the first field of view corresponding to the first receive module Rx1 and the second field of view corresponding to the second receive module Rx2 overlap in angular space, to meet requirements of an application scenario for different fields of view and different resolutions, so that the transceiver apparatus can have both large FoV and high resolution performance.

### Case 4:

The first field of view and the second field of view overlap in angular space, the first receive module Rx1 includes a first detector and a first receive optical assembly, and the second receive module Rx2 includes a second image sensor chip and a second receive optical assembly.

Alternatively, the first field of view and the second field of view overlap in angular space, the first receive module Rx1 includes a first image sensor chip and a first receive optical assembly, and the second receive module Rx2 includes a second detector and a second receive optical assembly.

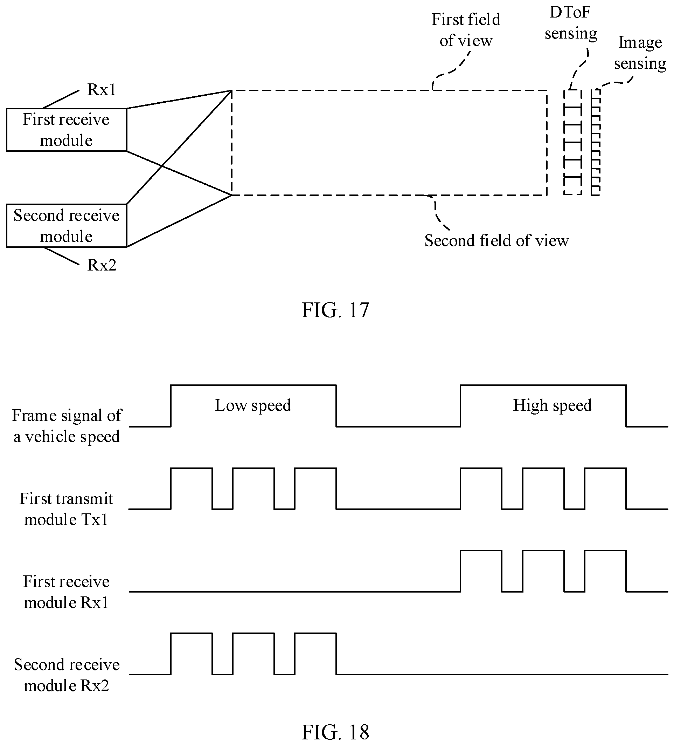

For details, refer to FIG. 17. FIG. 17 is a diagram of field of view splicing according to an embodiment of this application.

As shown in FIG. 17, the first receive module Rx1 includes a first detector and a first receive optical assembly, and is a receive module based on direct time of flight (direct time of flight, DToF). The second receive module Rx2 includes a second image sensor chip and a second receive optical assembly, and is a receive module based on image perception. In addition, the first field of view corresponding to the first receive module Rx1 and the second field of view corresponding to the second receive module Rx2 overlap in angular space, to meet requirements of an application scenario for different fields of view and different resolutions. Therefore, the transceiver apparatus can have both large FoV and high resolution performance.

Optionally, FIG. 17 shows that the first receive module Rx1 is a receive module based on DToF, and the second receive module Rx2 is a receive module based on image perception. This should not constitute a limitation on this embodiment of this application. Actually, the first receive module Rx1 may be a receive module based on image perception, and the second receive module Rx2 may be a receive module based on DToF. This is not limited in this embodiment of this application.

For example, the first receive module Rx1 includes a first image sensor chip and a first receive optical assembly, and is a receive module based on image perception. The second receive module Rx2 includes a second detector and a second receive optical assembly, and is a receive module based on DToF. In addition, the first field of view corresponding to the first receive module Rx1 and the second field of view corresponding to the second receive module Rx2 overlap in angular space, to meet requirements of an application scenario for different fields of view and different resolutions. Therefore, the transceiver apparatus can have both large FoV and high resolution performance.

Optionally, the receive module based on image perception may be specifically a receive module based on a linear red green blue (red green blue, RGB) high resolution, a receive module based on a near infrared (near infrared, NIR) high resolution, or a receive module based on another high-resolution image sensor. This is not limited in this embodiment of this application.

It may be understood that the fields of view corresponding to the two receive modules overlap in angular space, one receive module thereof is a receive module based on direct time of flight (direct time of flight, DToF), and the other receive module is a receive module based on image perception. Overlapping FoVs (that is, the first field of view and the second field of view) correspondingly covered by the two receive modules are relatively large, the receive module based on DToF corresponds to a relatively low resolution, and the receive module based on image perception can increase a resolution corresponding to the overlapping field of view, that is, increase a resolution corresponding to the receive module based on DToF, so that the transceiver apparatus can have both large FoV and high resolution performance. In addition, when the two receive modules share a same entire apparatus, relative alignment of the receive modules can be ensured at factory delivery, a high temperature, a low temperature, and during aging, so as to implement integration of a lidar and a camera (Camera), and increase a system resolution.

**In a possible embodiment**, the transceiver apparatus shown in any one of FIG. 3 to FIG. 9 may be applied to a vehicle.

When a vehicle speed of the vehicle is greater than a first value, the first receive module Rx1 in the transceiver apparatus enables receiving of an optical signal, the second receive module Rx2 in the transceiver apparatus disables receiving of an optical signal, and the first field of view corresponding to the first receive module Rx1 is less than the second field of view corresponding to the second receive module Rx2.

When the vehicle speed of the vehicle is less than a second value, the first receive module Rx1 in the transceiver apparatus disables receiving of an optical signal, and the second receive module Rx2 in the transceiver apparatus enables receiving of an optical signal, where the second value is less than or equal to the first value.

For details, refer to FIG. 18. FIG. 18 is a diagram of a working mode of a receive module according to an embodiment of this application.

As shown in FIG. 18, when the transceiver apparatus is applied to a vehicle, in an application scenario in which the vehicle travels at a high speed or at a low speed, working modes of the first receive module Rx1 and the second receive module Rx2 are different, and working mode switching can be performed according to different requirements of the application scenario.

A possible working mode is a high-speed traveling mode of the vehicle. The first receive module Rx1 that correspondingly covers a relatively small FoV (that is, the first field of view) enables receiving of an optical signal, has a relatively high resolution, and is suitable for long-distance ranging, and the second receive module Rx2 that correspondingly covers a relatively large FoV (that is, the second field of view) disables receiving of an optical signal.

In a low-speed traveling mode of the vehicle, the second receive module Rx2 that correspondingly covers a relatively large FoV (that is, the second field of view) enables receiving of an optical signal, has a relatively low resolution, and is suitable for short-distance ranging, and the first receive module Rx1 that correspondingly covers a relatively small FoV (that is, the first field of view) disables receiving of an optical signal.

It may be understood that, in an application scenario in which the vehicle travels at a high speed or at a low speed, the first value and the second value may be used as boundaries between the high speed and the low speed. It is determined that the vehicle travels at the high speed when the vehicle speed is greater than the first value, and it is determined that the vehicle travels at the low speed when the vehicle speed is less than the second value. In addition, the second value is less than or equal to the first value. This is not limited in this embodiment of this application.

According to embodiments of this application, requirements of an application scenario for different fields of view and different resolutions can be met, and system computing power overheads can be effectively reduced.

Optionally, in embodiments of this application, only an example in which the transceiver apparatus shown in any one of FIG. 3 to FIG. 9 is applied to the vehicle is used to describe working modes of the first receive module Rx1 and the second receive module Rx2 in different application scenarios. The transceiver apparatus shown in any one of FIG. 3 to FIG. 9 may be alternatively applied to another terminal or scenario, and may be a transportation tool, for example, a transportation means used in any possible scenario such as an aircraft, an unmanned aerial vehicle, a slow transport vehicle, a spacecraft, or a ship, or may be any device that can carry a detection apparatus, such as a surveying and mapping device. One or more transceiver apparatuses shown in any one of FIG. 3 to FIG. 9 are deployed on the terminal.

This application provides a chip, where the chip includes the transceiver apparatus provided in this application.

This application provides a radar or a radar system, where the radar or the radar system includes the transceiver apparatus or the chip provided in this application.

In a possible implementation, the radar includes but is not limited to a lidar and the like.

In a possible implementation, there may be a smart sensor integrated with a plurality of sensors. When the smart sensor includes but is not limited to a laser detection function, the smart sensor may also be referred to as a radar or a radar system.

This application further provides a terminal device. The terminal device includes the transceiver apparatus, the chip, the radar, or the radar system provided in this application. For example, the terminal device may be a transportation tool, for example, a transportation means used in any possible scenario such as a vehicle, a truck, an aircraft, an unmanned aerial vehicle, a slow transport vehicle, a spacecraft, or a ship, or may be any device that can carry a detection apparatus, such as a surveying and mapping device. One or more transceiver apparatuses, chips, radars, or radar systems provided in this application are deployed on the terminal device.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A transceiver apparatus, wherein the transceiver apparatus comprises:
a first transmit module, a first receive module, a second receive module, and a scanning module, wherein
the first transmit module and the first receive module are located on one side of the scanning module, and the second receive module is located on the other side of the scanning module;
the first transmit module is configured to transmit a first optical signal;
the scanning module is configured to propagate the first optical signal to object space;
the scanning module is further configured to propagate a second optical signal from the object space to the first receive module, and/or propagate a third optical signal from the object space to the second receive module, wherein the second optical signal and the third optical signal comprise an echo of the first optical signal; and
a first field of view corresponding to the first receive module is different from a second field of view corresponding to the second receive module.

2. The apparatus according to claim 1, wherein the first optical signal, the second optical signal, and the third optical signal are parallel to each other.

3. The apparatus according to claim 1 or 2, wherein the first field of view and the second field of view have different vertical fields of view.

4. The apparatus according to any one of claims 1 to 3, wherein the first field of view is comprised in the second field of view, or the second field of view is comprised in the first field of view.

5. The apparatus according to any one of claims 1 to 4, wherein the first transmit module is disposed above the first receive module, or the first receive module is disposed above the first transmit module, or the first transmit module and the first receive module are disposed horizontally.

6. The apparatus according to any one of claims 1 to 5, wherein the scanning module is a multi-faceted scanning mirror; and
the multi-faceted scanning mirror is a four-faceted polygonal scanning mirror.

7. The apparatus according to any one of claims 1 to 6, wherein the transceiver apparatus further comprises at least one of the following:
a first reflector and a second reflector;
the first reflector is configured to propagate the first optical signal transmitted by the first transmit module to the scanning module, and the first reflector is further configured to propagate the second optical signal from the scanning module to the first receive module; and
the second reflector is configured to propagate the third optical signal from the scanning module to the second receive module.

8. The apparatus according to any one of claims 1 to 7, wherein a transmitting time sequence of the first optical signal is the same as a receiving time sequence of the second optical signal and a receiving time sequence of the third optical signal.

9. The apparatus according to any one of claims 1 to 8, wherein the first receive module comprises a first detector and a first receive optical assembly, and the second receive module comprises a second detector and a second receive optical assembly.

10. The apparatus according to claim 9, wherein the first detector and the second detector are the same, a focal length of the first receive optical assembly is different from a focal length of the second receive optical assembly, and the first field of view and the second field of view overlap in angular space.

11. The apparatus according to claim 9, wherein a focal length of the first receive optical assembly is the same as a focal length of the second receive optical assembly, the first detector is disposed at an offset relative to an optical center of the first receive optical assembly, the second detector is disposed at an offset relative to an optical center of the second receive optical assembly, and the first field of view and the second field of view are continuous and do not overlap in angular space; or
a focal length of the first receive optical assembly is the same as a focal length of the second receive optical assembly, optical axes of the first receive module and the second receive module are not parallel, and the first field of view and the second field of view are continuous and do not overlap in angular space.

12. The apparatus according to claim 9, wherein the first receive module is the same as the second receive module, the first detector has a first offset relative to the second detector, the first offset is N+0.5 pixels, the first field of view and the second field of view overlap in angular space, and N is a quantity of channels in a non-overlapping interval.

13. The apparatus according to any one of claims 1 to 8, wherein the first field of view and the second field of view overlap in angular space, the first receive module comprises a first detector and a first receive optical assembly, and the second receive module comprises a second image sensor chip and a second receive optical assembly; or the first receive module comprises a first image sensor chip and a first receive optical assembly, and the second receive module comprises a second detector and a second receive optical assembly.

14. The apparatus according to any one of claims 1 to 13, wherein the transceiver apparatus is applied to a vehicle;
when a vehicle speed of the vehicle is greater than a first value, the first receive module enables receiving of an optical signal, and the second receive module disables receiving of an optical signal, wherein the first field of view is less than the second field of view; and
when the vehicle speed of the vehicle is less than a second value, the first receive module disables receiving of an optical signal, and the second receive module enables receiving of an optical signal, wherein the second value is less than or equal to the first value.

15. A chip, wherein the chip comprises the transceiver apparatus according to any one of claims 1 to 14.

16. A radar, wherein the radar comprises the transceiver apparatus according to any one of claims 1 to 14, or the chip according to claim 15.

17. A terminal device, wherein the terminal device comprises the transceiver apparatus according to any one of claims 1 to 14, or the chip according to claim 15, or the radar according to claim 16.

18. A vehicle terminal, wherein the vehicle terminal comprises the transceiver apparatus according to any one of claims 1 to 14, or the chip according to claim 15, or the radar according to claim 16, or the terminal device according to claim 17.
